Europäisches Patentamt

(19) European Patent Office

Office européen des brevets

(11) Publication number : **0 248 912 B1**

# (12) EUROPEAN PATENT SPECIFICATION

(45) Date of publication of patent specification :
24.07.91 Bulletin 91/30

(21) Application number : 87900261.6

(22) Date of filing : 11.12.86

(86) International application number :
PCT/JP86/00629

(87) International publication number :
WO 87/03749 18.06.87 Gazette 87/13

(51) Int. Cl.⁵ : **H02K 15/02, H02K 7/00**

## (54) ROTOR FOR BUILT-IN MOTOR.

(30) Priority : 12.12.85 JP 190328/85 U

(43) Date of publication of application :
16.12.87 Bulletin 87/51

(45) Publication of the grant of the patent :
24.07.91 Bulletin 91/30

(84) Designated Contracting States :
DE FR GB

(56) References cited :
FR-A- 1 329 423
JP-U- 5 727 753
SU-A- 1 175 650
US-A- 2 946 610
US-A- 4 459 504

(73) Proprietor : **FANUC LTD.**
**3580, Shibokusa Aza-Komanba, Oshino-mura**
**Minamitsuru-gun, Yamanashi 401-05 (JP)**

(72) Inventor : **NAKAMURA, Kousei**
**2-83, Asahigaoka 1-chome**
**Hino-shi Tokyo 191 (JP)**
Inventor : **YOSHIDA, Takashi**
**Denen-Haitsu 1-210 461, Oaza Imafuku**
**Kawagoe-shi Saitama 356 (JP)**

(74) Representative : **Jackson, Peter Arthur et al**
**Gill Jennings & Every, 53-64 Chancery Lane**
**London WC2A 1HN (GB)**

## Description

This invention relates to a rotor of a built-in motor, and specifically to an improvement for the purpose of enabling the shaft of the built-in motor to be readily removed from the core of the built-in motor.

It is not necessarily difficult to fit the shaft of an electric motor with the core of the electric motor, because various convenient methods, such as force fit, shrinkage fit, etc., are available. It is not necessarily easy, however, to remove the shaft of an electric motor from the core of the electric motor, because application of a considerable magnitude of heat, pressure or the like is generally required for this purpose.

Since a built-in motor has a stator which is mounted, with a flange, on the frame of a machine which is driven by the built-in motor, and since it has a rotor which is fitted with the shaft of the machine which is driven by the built-in motor, the core is frequently required to be removed from the shaft.

Therefore, a structure which allows a shaft to be readily removed from core is desirable for a built-in motor.

FR-A-1329423 discloses a shaft having a step ; a cylindrical sleeve surrounding the shaft and fitted with a surrounding piece ; and an annular hollow space between the shaft and the sleeve ; each end of the sleeve being fitted with parts which grip the shaft and hydraulic pressure supply means are provided in order to disengage the piece from the shaft.

US-A-2946610 discloses a shaft with steps facing one direction against which hydraulic pressure acts to remove the sleeve along the shaft.

In accordance with the invention, a rotor of a built-in motor comprises a shaft having a step ; a cylindrical sleeve, which is fitted with a surrounding core, and which surrounds the stepped part of the shaft with a clearance defining an annular hollow space therebetween, the ends of the sleeve being provided with respective radially inwardly projecting flanges the inner edges of which tightly grip different diameter parts of the shaft at respective sides of the step, the flanges having axial dimensions which together, are less than the axial spacing between the flanges, and the flanges being positioned axially beyond the ends of the axial length of engagement between the core and sleeve ; and hydraulic pressure supply means leading into the hollow space whereby the sleeve may be loosened from, and axially removed from, the shaft by introduction of hydraulic pressure into the space both to expand the sleeve radially outwardly and to force the sleeve along the shaft relatively to the shaft in the direction in which the step faces.

With this construction, the core can readily by removed from the shaft by applying hydraulic pressure to the hollow space, possibly through one of the flanges. It exerts a thrust in the direction of the shaft based on the asymmetry of the sleeve.

In the accompanying drawings :

Figure 1 is a cross-sectional view showing the assembled position of the rotor of a built-in motor of one embodiment of this invention ; and,

Figure 2 is a similar view during disassembly.

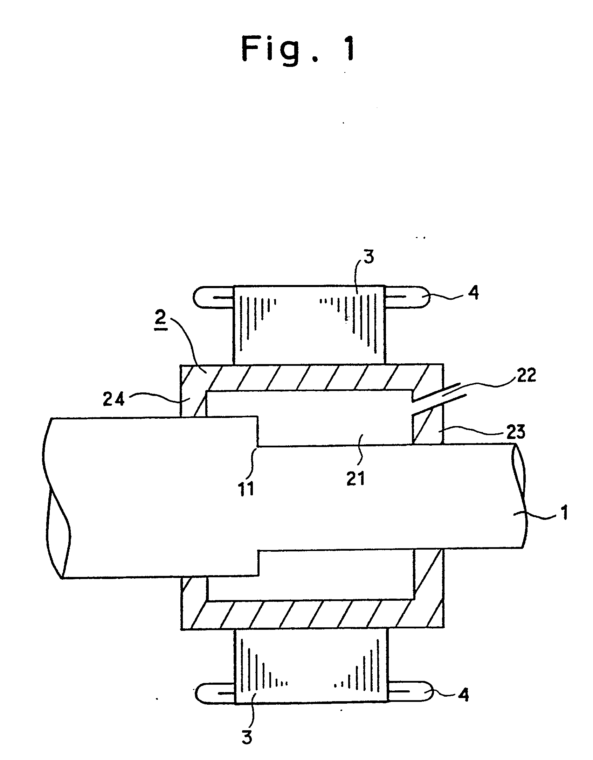

Referring to Figure 1, a shaft 1 (which may be the shaft of a machine driven by the built-in motor) has a stepped part. A sleeve 2 has a hollow space 21 therein. One end flange 23 of the sleeve 2 is fitted with a smaller diameter portion of the shaft 1 on the right-hand side of the stepped part 11 as shown in the drawing. An other end flange 24 of the sleeve 2 is fitted with a larger diameter portion of the shaft on the left-hand side of the stepped part 11 as shown in the drawing. As a result, the sleeve 2 is asymmetrical from end to end. The sleeve 2 has a hydraulic pressure supply means 22, extending through the flange 23, for supplying hydraulic pressure into the hollow space 21 of the sleeve 2.

A core 3 having a set of windings 4 is permanently fitted on a central part of the sleeve 2, so that there is little chance for the core 3 to be removed from the sleeve 2.

When this rotor is assembled, the core 3 is fitted with the sleeve 2. Then, the sleeve 2 is heated, before it is pushed to the left and is fitted with the shaft 1 by the shrinkage fit, as shown in the drawing.

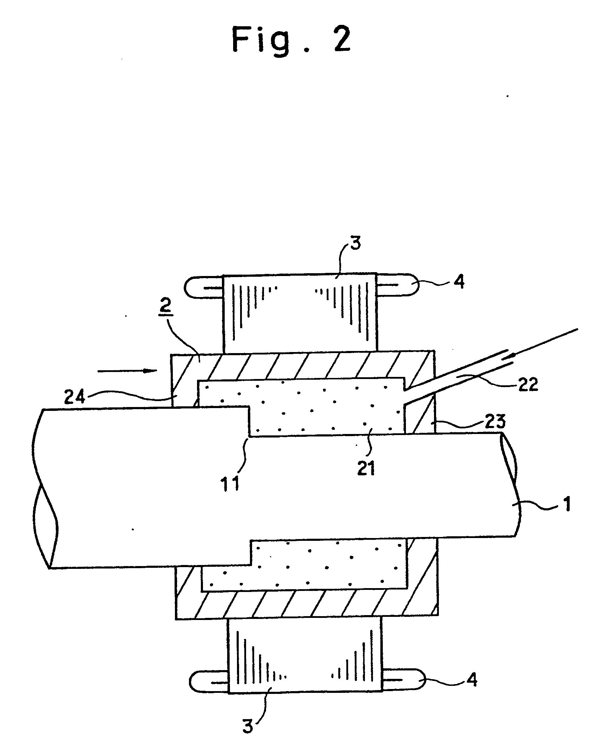

Referring to Figure 2, when the rotor is to be disassembled, i.e. when the sleeve 2 is to be removed from the shaft 1, hydraulic pressure with a high pressure of approximately 700 Kg/cm$^2$ is applied into the hollow space 21, employing the hydraulic pressure supply means 22.

An application of this magnitude of hydraulic pressure causes the sleeve 2 to be elastically deformed and the friction between both the end flanges 23 and 24 of the sleeve 2 and the shaft 1 is decreased owing to a decrease in the pressure between the sleeve 2 and the shaft 1. As a result, even a little difference in the area existing between the end flanges 23 and 24 of the sleeve 2, readily causes the sleeve 2 to be shifted in the direction of an arrow shown in the drawing (in the direction from the end whose area is smaller to the end whose area is larger) and resultantly to be removed from the shaft 1. In this way, the core 3 can readily be removed from the shaft 1.

## Claims

1. A rotor of a built-in motor and comprising a shaft (1) having a step (11) ; a cylindrical sleeve (2), which is fitted with a surrounding core (3), and which surrounds the stepped part of the shaft with a clearance defining an annular hollow space (21) therebetween, the ends of the sleeve being provided with respective radially inwardly projecting flanges (23,24) the inner edges of which tightly grip different diameter parts of the shaft at respective sides of the step 11, the flanges having axial dimensions which, together, are less than the axial spacing between the flanges, and the flanges being positioned axially beyond the ends of the axial length of engagement between the core and sleeve ; and hydraulic pressure supply means (22) leading into the hollow space whereby the sleeve may be loosened from and axially removed from the shaft by introduction of hydraulic pressure into the space (21) both to expand the sleeve radially outwardly and to force the sleeve along the shaft relatively to the shaft in the direction in which the step (11) faces.

2. A rotor according to claim 1, wherein the hydraulic pressure supply means (22) leads into the hollow space through one of the flanges (23).

## Patentansprüche

1. Rotor für einen Einbaumotor, umfassend eine Welle (1), die einen Absatz (11) aufweist ; eine zylindrische Hülse (2), die mit einem sie umgebenden Kern (3) versehen ist und die den abgesetzten Teil der Welle mit einem Abstand umgibt, durch den ein ringförmiger Hohlraum (21) dazwischen gebildet wird, wobei die Enden der Büchse jeweils mit radial einwärts vorspringenden Flanschen (23,24) versehen sind, deren innere Ränder im Durchmesser unterschiedliche Wellenteile zu beiden Seiten des Absatzes (11) eng umfassen, wobei die Flansche axiale Abmessungen aufweisen, die zusammen kleiner sind als der axiale Abstand zwischen den Flanschen, und wobei die Flansche axial außerhalb der Enden der axialen Eingriffslänge zwischen Kern und Hülse angeordnet sind ; und hydraulische Druckversorgungsmittel (22), die in den Hohlraum führen, wodurch die Hülse von der Welle gelöst und axial von ihr abgezogen werden kann, durch Einleitung von hydraulischem Druck in den Hohlraum (21), um sowohl die Hülse radial auszudehnen als auch die Hülse längs der Welle relativ zu dieser in einer Richtung zu drücken, in die der Absatz gerichtet ist.

2. Rotor nach Anspruch 1, dadurch gekennzeichnet, daß die Druckversorgungsmittel (22) durch einen der Flansche (23) in den Hohlraum geführt sind.

## Revendications

1. Rotor d'un moteur incorporé comprenant un arbre (1), présentant un épaulement (11), un manchon cylindrique (2), sur lequel est emboîté un noyau (3) l'entourant et qui entoure la partie étagée de l'arbre avec un jeu délimitant entre eux un espace creux annulaire (21), les extrémités du manchon étant pourvues de collets respectifs (23, 24), en saillie radialement vers l'intérieur, dont les bords intérieurs enserrent de manière étanche des parties de diamètres différents de l'arbre situées de part et d'autre de l'épaulement (11), ces collets ayant des dimensions axiales qui, additionnées, sont inférieures à l'espacement axial existant entre ces collets et ces derniers étant disposés axialement au-delà des extrémités du tronçon axial de coopération entre le noyau et le manchon, et des moyens de fourniture de pression hydraulique (22) débouchant dans l'espace creux, de sorte que le manchon peut être libéré de l'arbre, et en être retiré axialement, par introduction d'une pression hydraulique dans l'espace (21), à la fois pour dilater le manchon radialement vers l'extérieur et pour déplacer de force ce manchon le long de l'arbre et par rapport à celui-ci dans la direction vers laquelle l'épaulement (11) est tourné.

2. Rotor suivant la revendication 1, dans lequel les moyens de fourniture de pression hydraulique (22) débouchent dans l'espace creux en traversant l'un (23) des collets.

# Fig. 1

# Fig. 2